# EUROPÄISCHE PATENTSCHRIFT

(11) **EP 0 438 760 B1**
(45) Veröffentlichungstag und Bekanntmachung des Hinweises auf die Patenterteilung: **12.10.1994**
(21) Anmeldenummer: 90125115.7
(22) Anmeldetag: 21.12.1990
(51) Int. Cl.: F16F 1/36

(54) **Hohlzylindrischer Federblock**
Hollow cylindrical spring block
Bloc de ressort cylindrique creux

(30) Priorität: 23.12.1989 DE 3942903
(43) Veröffentlichungstag der Anmeldung: 31.07.1991
(73) Patentinhaber: METZELER GIMETALL AG, D-80992 München (DE)
(72) Erfinder: Bitschkus, Horst, W-5411 Hilgert (DE); Steffens, Rainer, W-5416 Hillscheid (DE)
(74) Vertreter: Seibert, Hannelore

(56) Entgegenhaltungen:
- EP-A- 0 320 608
- EP-A- 0 327 864
- EP-A- 0 379 678
- DE-A- 3 739 638
- FR-A- 1 090 004
- GB-A- 776 990
- US-A- 3 402 924
- US-A- 3 532 319
- PATENT ABSTRACTS OF JAPAN vol. 12, no. 257 (M-719)(3104) 20 Juli 1988,& JP-A-63 38731 (KINUGAWA RUBBER IND) 19 Februar 1988,
- PATENT ABSTRACTS OF JAPAN vol. 12, no. 222 (M-712)(3069) 24 Juni 1988,& JP-A-63 19439 (BRIDGESTONE CORP.) 27 Januar 1988,

## Beschreibung

Die Erfindung bezieht sich auf einen hohlzylindrischen Federblock gemäß Oberbegriff des Anspruchs 1. Ein derartiger Federblock ist aus der DE-A-3 739 638 bekannt.

Federblöcke aus Gummi mit Hohlkanälen sind aus der DE-C-723 596 bekannt. Durch derartige Hohlkanäle ist es möglich, die Federsteifigkeit eines solches Gummiblockes gezielt und abweichend von der Federsteifigkeit eines entsprechenden massiven Blockes einzustellen. Darüber hinaus kann mit einer Vielzahl derartiger Kanäle in einem solchen Block die Dämmung von Körperschall günstig beeinflußt werden.

Oftmals ist es erforderlich, daß derartige Federblöcke hohlzylindrisch ausgebildet sein müssen. Für die Anordnung entsprechender Hohlkanäle in solchen hohlzylindrischen Federblöcken kann die DE-A-3739 638 eine Anregung geben, bei der die mit kugelförmigen Hohlräumen durchsetzten Hohlkanäle achsparallel zur Zylinderachse verlaufen. Eine solche Anordnung ist jedoch nur bei einer radialen Belastung eines solchen Gummizylinders zweckmäßig.

Der vorliegenden Erfindung liegt demgegenüber die Aufgabe zugrunde, einen hohlzylindrischen Federblock zu schaffen, bei dem die innenliegenden Hohlkanäle so angeordnet sind und verlaufen, daß der Federblock im wesentlichen axiale Belastungen oder aus anderen Richtungen einwirkende Belastungen aufnehmen kann.

Zur Lösung dieser Aufgabe sind erfindungsgemäß die Merkmale des Anspruchs 1 vorgesehen.

Damit ergeben sich zylindrische Federblöcke einer neuen Konfiguration, die Kräfte beliebiger Einwirkungsrichtung aufnehmen können und dabei einfach herzustellen sind.

Diese Ringkanäle können dabei über radiale Ringspalte zum Zylinderaußenmantel oder aber über axiale Ringspalte zu einer Stirnseite des Hohlzylinders hin offen sein.

Zweckmäßigerweise weisen die Ringkanäle einen kreisförmigen Querschnitt auf.

Es ist dabei möglich, daß die Ringkanäle über den Umfang wechselnden Durchmesser mit Verengungen und Erweiterungen aufweisen.

Dabei können die an die Ringkanäle anschließenden Ringspalte entsprechend dem Querschnittsverlauf der Ringkanäle ebenfalls unterschiedliche Breite aufweisen.

Die Ringspalte können dabei in Bezug auf die Ringkanäle so angeordnet sein, daß ihre Mittelebene die Achse der Ringkanäle schneidet, wobei diese Mittelebene im rechten Winkel zur Zylinderachse oder aber auch in einem von 90° abweichenden Winkel zur Zylinderachse verlaufen kann. Es ist aber auch möglich, daß die Ringspalte tangential an die Ringkanäle anschließen, oder aber daß die Begrenzungsflächen der Ringspalte tangential von den Ringkanälen ausgehen und sich in einem öffnenden oder verringernden Winkel nach außen erstrecken.

Es ist dabei auch möglich, daß der Federblock Ringkanäle mit radialen Ringspalten als auch Ringkanäle mit axialen Ringspalten aufweist.

Für eine leichtere Herstellung können sich die Ringkanäle auch jeweils nur über einen Teilumfang mit zwischen der Stirnseiten der Teilringkanäle stehenbleibenden Materialschichten des Federblocks erstrecken.

Es ist auch möglich, den hohlzylindrischen Federblock zweckmäßigerweise mit einem Verhältnis von Innen- zu Außendurchmesser von höchstens 1:2 auszubilden.

Anhand einer schematischen Zeichnung sind Aufbau und Funktionsweise von Ausführungsbeispielen nach der Erfindung näher erläutert. Dabei zeigen
- Fig. 1: einen Längsschnitt durch einen hohlzylindrischen Federblock mit verschiedenen Möglichkeiten der Gestaltung der Ringkanäle,
- Fig. 2A: einen Querschnitt durch einen halben Federblock nach Fig. 1 entsprechend der Schnittlinie II-II,
- Fig. 2B: einen Querschnitt durch einen halben Ringkanal mit wechselndem Durchmesser,
- Fig. 3: einen Querschnitt durch einen solchen Federblock mit abgewandelter Gestaltung der Ringkanäle,
- Fig. 4: einen Längsschnitt durch einen hohlzylindrischen Federblock mit zu den Ringkanälen unterschiedlich verlaufenden Ringspalten und
- Fig. 5: einen Teillängsschnitt durch einen hohlzylindrischen Federblock, der nicht vom Schutzumfang des Anspruchs 1 erfaßt ist, mit einer weiteren Gestaltungsmöglichkeit der Ringkanäle.

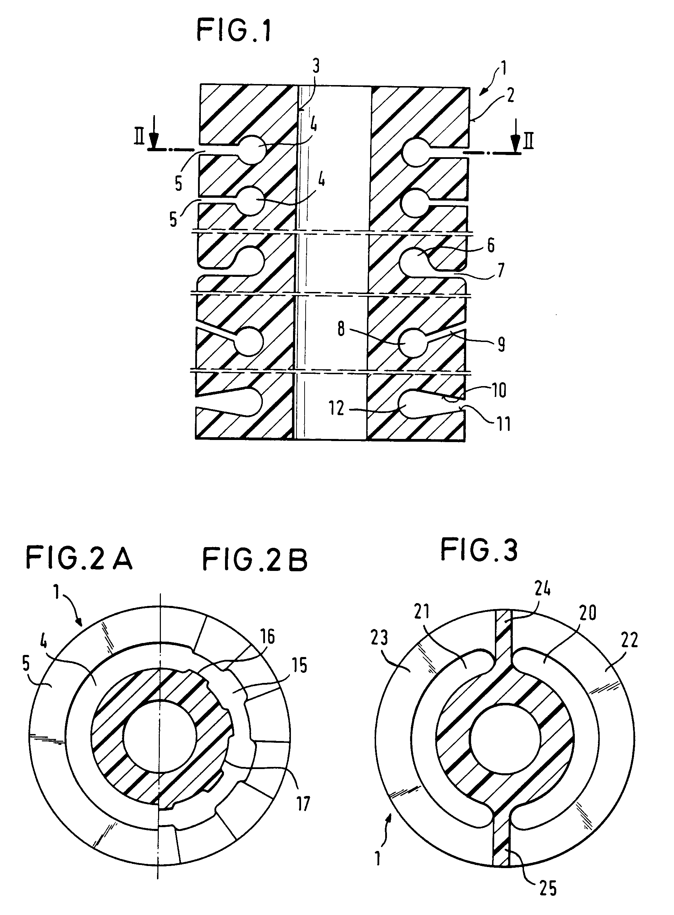

Wie man aus dem oberen Teil des Längsschnittes nach Fig. 1 und des Teilquerschnittes nach Fig. 2 A ersieht, weist der hohlzylindrische Federblock 1 mit Außenmantel 2 und Innenmantel 3 umlaufende Ringkanäle 4 mit kreisförmigem Querschnitt auf, die jeweils gleichen Durchmesser haben und entlang der Zylinderachse axial voneinander beabstandet sind. Von diesen Ringkanälen 4 gehen radiale Ringspalte 5 aus, die nach außen zum Zylindermantel 2 hin offen sind. Diese Ringspalte 5 sind dabei auf mittlerer Höhe der Ringkanäle 4 so angesetzt, daß die Mittelebene der parallel bewandeten Ringspalte die Achse der Ringkanäle schneidet.

Im darunterliegenden Bereich des Hohlzylinders 1 sind Ringkanäle 6 dargestellt, bei denen der Ringspalt 7 tangential praktisch von der Unterkante des Ringkanales 6 ausgeht.

Im nachfolgenden Bereich sind die von Ringkanälen 8 ausgehenden Ringspalte 9 im schrägen Winkel nach oben verlaufend angesetzt.

Eine weitere Möglichkeit ist im unteren Abschnitt des Hohlzylinders 1 dargestellt, bei dem die beiden Begrenzungswände 10 und 11 des Ringspaltes tangential vom Ringkanal 12 ausgehen und sich dabei zur Umfangswand 2 hin annähern. Es ist entsprechend dieser Variante in gleicher Weise möglich - was jedoch zeichnerisch nicht gesondert dargestellt ist - daß die beiden Begrenzungsflächen 10 und 11 in einem sich nach außen öffnenden Winkel bei einem Ringkanal mit entsprechend geringerem Durchmesser ausgebildet sind.

Bei dem Querschnitt nach Fig. 2 A weist der Ringkanal 4 einen konstanten, kreisförmigen Querschnitt auf. In der rechten Seite dieser Darstellung entsprechend Fig. 2 B kann dieser Ringkanal 15 jedoch wechselnden Querschnitt mit aufeinanderfolgenden Verengungen 16 und Erweiterungen 17 aufweisen. Bei einer solchen Kanalgestaltung sollten dann auch die radial nach außen gerichteten Ringspalte entsprechend unterschiedliche Höhe aufweisen, wie das auch aus der Zeichnung ersichtlich ist.

Bei den bisher dargestellten Ausführungsbeispielen ist davon ausgegangen worden, daß die Ringkanäle sich geschlossen über den gesamten Umfang erstrecken. Eine solche Gestaltung kann jedoch zu gewissen Produktionsschwierigkeiten führen. Deshalb ist gemäß dem Querschnitt nach Fig. 3 vorgesehen, daß sich ein solcher Ringkanal in zwei Teilkanäle 20 und 21 unterteilt, an die sich jeweils nach außen die entsprechenden Ringspalte 22 und 23 anschließen. Zwischen den Stirnseiten dieser Teilkanäle 20 und 21 bleiben dann entsprechende Materialschichten 24 und 25 des eigentlichen Federblockes 1 stehen. An dieser Darstellung läßt sich auch das Herstellungsverfahren eines solchen Federblockes dahingehend erklären, daß in den eigentlichen Formenhohlraum entsprechend der äußeren Kontur des Federblockes 1 entsprechende Formkerne entsprechend den Teilringkanälen 20 und 21 mit zugehörigen Ansätzen zur Bildung der radialen Spalte 22 und 23 eingesetzt und nach Ausfüllen des Formennestes mit zu vulkanisierendem Kautschuk und Ausvulkanisation radial und seitlich nach außen herausgezogen werden, so daß dann die entsprechenden Ringkanäle bzw. Ringkanalabschnitte in den eigentlichen Federblock eingeformt sind.

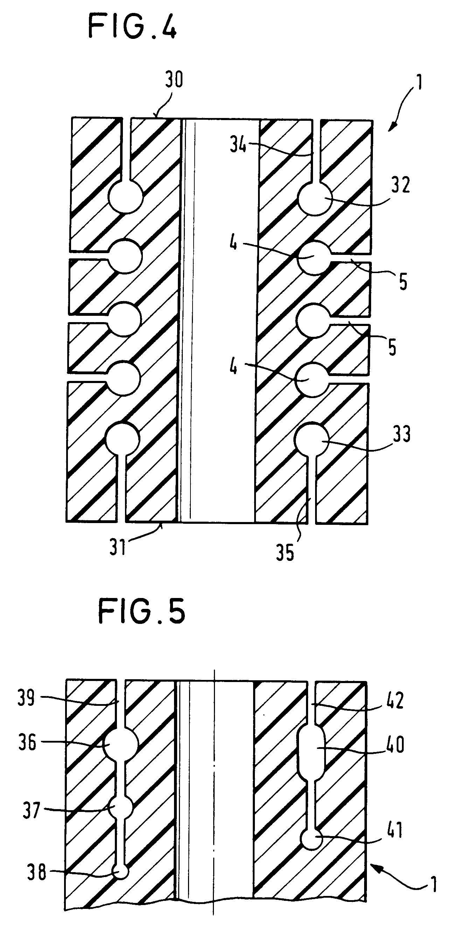

Eine weitere Gestaltungsmöglichkeit ergibt sich entsprechend dem Ausführungsbeispiel nach Fig. 4. Hierbei sind die in der Nähe der Stirnwände 30 und 31 des zylindrischen Federblockes 1 angeordneten Ringkanäle 32 und 33 über zur Längsachse konzentrische Ringspalte 34 und 35 mit den Stirnseiten 30 und 31 verbunden und somit ebenfalls nach außen offen. Die über die Länge des Hohlzylinders 1 verteilt angeordneten Ringkanäle 4 sind dann in bereits beschriebener Weise über radiale Ringspalte 5 nach außen geöffnet.

Bei einer Anordnung der Ringspalte konzentrisch zur Zylinderachse für Ringkanäle in der Nähe einer Stirnfläche des Federblock-Zylinders sind auch Anordnungen denkbar, wie sie in Fig. 5 im Längsschnitt dargestellt sind. Auf der linken Seite sind dabei drei Ringkanäle 36, 37 und 38 mit gestaffelt abnehmenden Durchmesser vorgesehen, die jedoch im gegensatz zu Anspruch 1 über einen durchgehenden Ringspalt 39 miteinander in Verbindung stehen, über die dann auch die entsprechenden, miteinander verbundenen Formkerne der Kanäle 36, 37 und 38 herausgezogen werden können.

Eine andere Gestaltungsmöglichkeit für die Ringkanäle ergibt sich auf der rechten Seite dieser Figur, bei der der obere Kanal 40 etwa leicht oval oder rechteckig mit abgerundeten Ecken gestaltet ist, während der untere Kanal 41 wieder einen kreisförmigen Querschnitt aufweist.

Derartige axial offene Kanäle entsprechend Fig. 5 können in gleicher Weise mit radial offenen Kanälen kombiniert werden, wie das in Fig. 4 dargestellt ist.

Damit ergibt sich ein hohlzylindrischer Federblock, der durch entsprechende Kanäle an die jeweils gewünschte Federkennlinie angepaßt werden kann und eine optimale Körperschalldämmung bewirkt, und der darüber hinaus Kräfte sowohl in axialer als auch in radialer als auch in einer dazu geneigten Richtung aufnehmen kann.

## Patentansprüche

1. Hohlzylindrischer Federblock (1) aus einem elastomeren Material mit innerhalb des Federblockes (1) verlaufenden, parallelen und voneinander getrennten Hohlkanälen (4; 6; 8; 12; 15; 20, 21; 32; 33), wobei die Innenfläche des Federblocks (1) Zylindrisch ausgebildet ist und die Hohlkanäle (4; 6; 8; 12; 15; 20, 21; 32, 33) zu einer der Außenflächen (2; 30, 31) des Federblocks (1) hin offen sind dadurch gekennzeichnet, daß die Hohlkanäle (4; 6; 8; 12; 15; 20, 21; 32; 33) als Ringkanäle ausgebildet sind, konzentrisch zur Zylinderachse des kreiszylindrischen Federblocks (1) auf gleichen Radien angeordnet und entlang der Zylinderachse axial voneinander beabstandet sind und daß die Ringkanäle (4; 6; 8; 12; 15; 20, 21; 32; 33) über gegenüber dem Kanalquerschnitt schmale Ringspalte (5; 7; 9; 22, 23; 34, 35) zu der einen der Außenflächen (2; 30, 31) des Federblocks (1) hin offen sind.

2. Federblock nach Anspruch 1, dadurch gekennzeichnet, daß die Ringkanäle (4; 7; 8; 12; 15; 20, 21; 32, 33) kreisförmigen Querschnitt aufweisen.

3. Federblock nach Anspruch 2, dadurch gekennzeichnet, daß die Ringkanäle (15) über den Umfang wechselnden Durchmesser mit Verengungen (16) und Erweiterungen (17) aufweisen.

4. Federblock nach Anspruch 3, dadurch gekennzeichnet, daß die an die Ringkanäle (15) anschließenden Ringspalte entsprechend dem Querschnittsverlauf der Ringkanäle (15) unterschiedliche Breite aufweisen.

5. Federblock nach Anspruch 2, dadurch gekennzeichnet, daß die Mittelebene der Ringspalte (5) die Achse der Ringkanäle (4) schneidet.

6. Federblock nach Anspruch 5, dadurch gekennzeichnet, daß die Mittelebene der Ringspalte (9) in einem von 90° abweichenden Winkel zur Zylinderachse verläuft.

7. Federblock nach Anspruch 2, dadurch gekennzeichnet, daß die Ringspalte (7) tangential an die Ringkanäle (6) anschließen.

8. Federblock nach Anspruch 2, dadurch gekennzeichnet, daß die Begrenzungsflächen (10, 11) der Ringspalte tangential an die Ringkanäle (12) anschließen.

9. Federblock nach Anspruch 2, dadurch gekennzeichnet, daß die Ringkanäle (36, 37, 38) unterschiedlichen Querschnitt aufweisen.

10. Federblock nach Anspruch 1, dadurch gekennzeichnet, daß der Federblock (1) Ringkanäle (4) mit radialen Ringspalten (5) als auch Ringkanäle (32, 33) mit axialen Ringspalten (34, 35) aufweist.

11. Federblock nach Anspruch 2, dadurch gekennzeichnet, daß die Ringkanäle (21, 22) sich jeweils nur über einen Teilumfang mit zwischen den Stirnseiten der Teilringkanäle (20, 21) stehenbleibenden Materialschichten (24, 25) des Federkörpers (1) erstrecken.

12. Federblock nach einem der Ansprüche 1 bis 11, dadurch gekennzeichnet, daß der hohlzylindrische Federblock (1) mit einem Verhältnis von Innen- zu Außendurchmesser von höchstens 1:2 ausgebildet ist.

## Claims

1. Hollow cylindrical spring block (1) of an elastomeric material with parallel hollow channels (4; 6; 8; 12; 15; 20, 21; 32; 33) which extend inside the spring block (1) and are separate from one another, the inner surface of the spring block (1) being cylindrical and the hollow channels (4; 6; 8; 12; 15; 20, 21; 32, 33) being open towards one of the outer surfaces (2; 30, 31) of the spring block (1), characterised in that the hollow channels (4; 6; 8; 12; 15; 20, 21; 32; 33) are formed as ring channels, are arranged on the same radii, concentrically with the cylinder axis of the circular cylindrical spring block (1), and are axially spaced apart along the cylinder axis, and that the ring channels (4; 6; 8; 12; 15; 20, 21; 32; 33) are open towards one of the outer surfaces (2; 30, 31) of the spring block (1) via ring gaps (5; 7; 9; 22, 23; 34, 35) which are narrow relative to the channel cross section.

2. Spring block according to claim 1, characterised in that the ring channels (4; 7; 8; 12; 15; 20, 21; 32, 33)) have a circular cross section.

3. Spring block according to claim 2, characterised in that the ring channels (15) have diameters which vary over the circumference and comprise narrowed portions (16) and enlargements (17).

4. Spring block according to claim 3, characterised in that the ring gaps which adjoin the ring channels (15) are of different widths, according to the cross-sectional shape of the ring channels (15).

5. Spring block according to claim 2, characterised in that the centre plane of the ring gaps (5) intersects the axis of the ring channels (4).

6. Spring block according to claim 5, characterised in that the centre plane of the ring gaps (9) extends at an angle diverging from 90° to the cylinder axis.

7. Spring block according to claim 2, characterised in that the ring gaps (7) adjoin the ring channels (6) at a tangent.

8. Spring block according to claim 2, characterised in that the boundary surfaces (10, 11) of the ring gaps adjoin the ring channels (12) at a tangent.

9. Spring block according to claim 2, characterised in that the ring channels (36, 37, 38) have different cross sections.

10. Spring block according to claim 1, characterised in that the spring block (1) comprises ring channels (4) with radial ring gaps (5) as well as ring channels (32, 33) with axial ring gaps (34, 35).

11. Spring block according to claim 2, characterised in that the ring channels (21, 22) each extend just over part of the circumference, with material layers (24, 25) of the spring body (1) remaining between the end faces of the partial ring channels (20, 21).

12. Spring block according to one of claims 1 to 11, characterised in that the hollow cylindrical spring block (1) is formed with a ratio of inside to outside diameter of at most 1:2.

## Revendications

1. Bloc formant ressort cylindrique creux (1) réalisé en un matériau élastomère et comportant des canaux parallèles (4;6;8;12;15;20,21;32;33), qui sont séparés les uns des autres et s'étendent à l'intérieur du bloc formant ressort (1), caractérisé par le fait que les canaux (4;6;8; 12;15;20,21;32;33) sont réalisés sous la forme de canaux annulaires, sont disposés sur des rayons identiques concentriquement par rapport à l'axe du bloc formant ressort en forme de cylindre circulaire (1) et sont distants axialement les uns des autres dans la direction de l'axe du cylindre, et que les canaux annulaires (4;6;8;12;15; 20,21;32;33) s'ouvrent, au moyen de fentes annulaires (5;7;9; 22,23;34,35), qui sont étroites par rapport à la section transversale des canaux, en direction de l'une des surfaces extérieures (2;30,31) du bloc formant ressort (1).

2. Bloc formant ressort suivant la revendication 1, caractérisé par le fait que les canaux annulaires (4;6;8;12; 15;20,21;32;33) possèdent une section transversale circulaire.

3. Bloc formant ressort suivant la revendication 2, caractérisé par le fait que les canaux annulaires (15) possèdent des diamètres, qui varient sur la circonférence, avec des rétrécissements (16) et des élargissements (17).

4. Bloc formant ressort suivant la revendication 3, caractérisé par le fait que les fentes annulaires, qui se raccordent aux canaux annulaires (15), possèdent des largeurs différentes, conformément à la variation de la section transversale des canaux annulaires (15).

5. Bloc formant ressort suivant la revendication 2, caractérisé par le fait que le plan médian des fentes annulaires (5) recoupe l'axe des canaux annulaires (4).

6. Bloc formant ressort suivant la revendication 5, caractérisé par le fait que le plan médian des fentes annulaires (9) fait un angle, qui diffère de 90°, par rapport à l'axe du cylindre.

7. Bloc formant ressort suivant la revendication 2, caractérisé par le fait que les fentes annulaires (7) se raccordent tangentiellement aux canaux annulaires (6).

8. Bloc formant ressort suivant la revendication 3, caractérisé par le fait que les surfaces limites (10, 11) des fentes annulaires se raccordent tangentiellement aux canaux annulaires (12).

9. Bloc formant ressort suivant la revendication 2, caractérisé par le fait que les canaux annulaires (36, 37, 38) possèdent des sections transversales différentes.

10. Bloc formant ressort suivant la revendication 1, caractérisé par le fait que le bloc formant ressort (1) possède des canaux annulaires (4) pourvus de fentes annulaires radiales (5) ainsi que, également, des canaux annulaires (32, 33) possédant des fentes annulaires axiales (34, 35).

11. Bloc formant ressort suivant la revendication 2, caractérisé par le fait que les canaux annulaires (21, 22) s'étendent respectivement seulement sur une partie de la circonférence, des couches (24,25) du matériau du corps de ressort (1) étant présentes entre les faces frontales des canaux annulaires partiels (20, 21).

12. Bloc formant ressort suivant l'une des revendications 1 à 11, caractérisé par le fait que le bloc formant ressort cylindrique creux (1) est réalisé avec un rapport de son diamètre intérieur et son diamètre extérieur égal au maximum à 1:2.
